# EUROPÄISCHE PATENTSCHRIFT

(11) **EP 1 976 728 B1**
(45) Veröffentlichungstag und Bekanntmachung des Hinweises auf die Patenterteilung: **27.05.2009**
(21) Anmeldenummer: 07724291.5
(22) Anmeldetag: 10.04.2007
(51) Int. Cl.: B60R 21/205, B60R 21/20

(54) **GASSACKMODUL**
GAS BAG MODULE
MODULE D'AIRBAG

(30) Priorität: 11.04.2006 DE 102006017751
(43) Veröffentlichungstag der Anmeldung: 08.10.2008
(73) Patentinhaber: Takata-Petri AG, 63743 Aschaffenburg (DE)
(72) Erfinder: ECKERT, Nick, 12587 Berlin (DE); FAGIR, Rafael, 10559 Berlin (DE); WOLLNY, Frank, 14055 Berlin (DE)
(74) Vertreter: Baumgärtel, Gunnar
(86) Internationale Anmeldenummer: PCT/EP2007/003353
(87) Internationale Veröffentlichungsnummer: WO 2007/118699

(56) Entgegenhaltungen:
- WO-A-03/008487
- DE-A1- 10 114 208
- DE-A1- 19 856 623
- DE-A1- 19 904 320
- JP-A- 4 146 840

## Beschreibung

Die Erfindung betrifft ein Gassackmodul, insbesondere für ein Kraftfahrzeug, gemäß dem Oberbegriff des Anspruchs 1.

Ein derartiges Gassackmodul umfasst einen flexiblen, durch Falten mehrlagig anordenbaren Gassack, der z.B. aus einem Gewebe, einem Gewirk oder einem folienartigen Material bestehen kann und zum Schutz einer Person mit Gas aufblasbar ist. Vor dem Aufblasen ist der Gassack - bezogen auf einen Einbauzustand - in einem flächig ausgebreiteten Zustand angeordnet, in dem er sich entlang einer vordefinierbaren fiktiven Fläche erstreckt. Hierbei kann die fiktive Fläche eine Krümmung aufweisen. Ein solches Gassackmodul ist aus der DE 199 04 320 bekannt.

Weiterhin ist vorgesehen, dass der Gassack durch eine Hülle umgeben ist, die vor dem Aufblasen des Gassackes derart evakuiert ist, dass der flächig ausgebreitete Zustand des Gassackes formbeständig ist.

Aus der JP 04-146840 A ist ein gattungsgemäßer Gassack zur Anordnung in einem Lenkrad bekannt, der in einem zusammengefalteten Zustand in eine teilweise geöffnete Schutzhülle eingeführt wird, wobei in jener Schutzhülle befindliche Luft zum Ausbilden eines Vakuums herausgesaugt wird und die Schutzhülle hiernach geschlossen und abgedichtet wird.

Des weiteren ist aus der DE 101 14 208 A1 eine Verfahren zum Zusammenfügen von Bauteilen eines Gassackmoduls für ein Fahrzeuginsassen-Rückhaltesystem bekannt, bei dem zumindest ein Bauteil des Gassack-Moduls, bevorzugter Weise der Gassack, in einer Hülle verstaut wird. Anschließend wird ein Unterdruck in der Hülle erzeugt und die Hülle wird gasdicht verschlossen.

Bei einem derartigen Gassackmodul besteht die Schwierigkeit, dass der Gassack in seinem flächig ausgebreiteten Zustand bei der Montage an einem Träger aufgrund seiner Flexibilität (mangelnden Steifheit) schwierig zu handhaben ist, d.h., die Positionierung und Festlegung des Gassackes am Einbauort ist aufwendig und zeitraubend.

Der Erfindung liegt daher das Problem zugrunde, ein Gassackmodul der eingangs genannten Art bereitzustellen, das hinsichtlich seiner Handhabung bei der Montage verbessert ist.

Dieses Problem wird durch ein Gassackmodul mit den Merkmalen des Anspruchs 1 gelöst.

Danach ist die Hülle auch im evakuierten Zustand mit samt dem Gassack mechanisch verformbar, insbesondere händisch verformbar, ausgebildet, wobei die jeweilige, durch Verformen erzeugte Raumform des die Hülle und den darin befindlichen Gassack umfassenden Gassackpakets formbeständig ist. Hierdurch kann das Gassackpaket zu einem beliebigen Zeitpunkt in eine endgültige Raumform gebracht werden, beispielsweise kurz vor dem Festlegen des Gassackpakets an einem Träger (z.B. eine Instrumententafel eines Kraftfahrzeuges). Insbesondere lässt sich die evakuierte Hülle mit samt dem darin befindlichen Gassack aufgrund der flächigen Anordnung des Gassackes in der evakuierten Hülle vorzugsweise auch händisch verformen. Dies ist bei herkömmlichen, nicht flächig ausgebildeten Gassackpaketen, wie sie z.B. in Fahrerairbagmodulen zu finden sind, nicht der Fall.

Unter einem Evakuieren der Hülle wird ein Vorgang verstanden, bei dem in einem von der Hülle umgebenen Innenraum, in dem der Gassack in seinem flächig ausgebreiteten Zustand angeordnet ist, ein Unterdruck erzeugt wird und sodann die Hülle verschlossen wird. Hiernach herrscht vor dem Aufblasen des Gassackes ein Druck im Innenraum der Hülle, der substantiell geringer ist als der Druck in dem die Hülle umgebenen Außenraum. Vorzugsweise wird beim Evakuieren der Hülle annähernd ein Vakuum im Innenraum der Hülle erzeugt.

Hierdurch behält der Gassack beim Positionieren und Festlegen an einem Träger des Gassackes seine Form bei, wodurch die Handhabung des Gassackes bei der Montage erheblich vereinfacht wird.

Vorzugsweise erstreckt sich der Gassack in seinem flächig ausgebreiteten Zustand entlang der vordefinierbaren fiktiven Fläche, und zwar derart, dass zumindest über einen Teil der Fläche nur zwei Lagen des Gassackes quer zur Fläche übereinander liegen. Bevorzugt liegen über einem Großteil der Fläche, d.h., mehr als der Hälfte der Fläche, nur zwei Lagen des Gassackes quer zur Fläche übereinander.

Der Gassack ist in seinem flächig ausgebreiteten Zustand nicht oder nur geringfügig gefaltet, insbesondere einmal oder zweimal. Vorzugsweise sind quer zur fiktiven Fläche, entlang der sich der Gassack in seinem flächig ausgebreiteten Zustand (vor dem Aufblasen) erstreckt, nicht mehr als zwei Lagen des Gassackes übereinander angeordnet. Der Gassack setzt sich aus zumindest einer oder mehrerer flexibler und faltbarer Gassackplatten zusammen, die in ihrer Gesamtheit einen mit Gas befüllbaren Innenraum des Gassackes umgeben. Die Anzahl der Lagen des Gassackes in seinem flächig ausgebreiteten Zustand entspricht dabei der Anzahl der Schnittpunkte zwischen einer quer zur Fläche verlaufenden Geraden und der mindestens einen Gassackplatte. Die Gassackplatten bestehen zum Beispiel aus einem Gewebe, einem Gewirk oder aus einem folienartigen Material und werden vorzugsweise miteinander verklebt, verschweißt oder vernäht.

Eine weitere Variante der Erfindung sieht vor, dass quer zur fiktiven Fläche, entlang der sich der Gassack vor dem Aufblasen erstreckt, an jeder Stelle der Fläche nicht mehr als vier Lagen des Gassackes quer zur Fläche übereinander angeordnet sind. Hierzu kann der Gassack einmal oder auch mehrmals (an verschiedenen Stellen) auf sich selbst gefaltet sein, so dass über einen Großteil der Fläche jeweils vier Lagen des Gassackes quer zur Fläche übereinander liegen. Insbesondere kann der Gassack deckungsgleich auf sich selbst gefaltet sein, so dass vier Lagen des Gassackes quer zur Fläche, entlang der sich der Gassack in seinem flach ausgebreiteten Zustand erstreckt, übereinander liegen,

Vorzugsweise liegen je zwei benachbarte Lagen des Gassackes im evakuierten Zustand der Hülle eng aneinander an. Insbesondere existieren keine Spalte (Zwischenräume) zwischen den einzelnen Lagen.

In einer besonders bevorzugten Variante der Erfindung ist vorgesehen, dass die evakuierte Hülle mit dem darin befindlichen Gassack quer zur Fläche, entlang der sich der Gassack in seinem flächig ausgebreiteten Zustand erstreckt, weniger als 1 cm dick ist. D.h. das die evakuierte Hülle und den Gassack umfassende Gassackpaket hat entlang der besagten Richtung (quer zu jener Fläche) eine Ausdehnung von weniger als 1 cm. Die Fläche, entlang der sich der Gassack (und die Hülle sowie das gesamte Gassackpaket) erstreckt, kann dabei gekrümmt sein. Bei der besagten Dicke von weniger als 1 cm handelt es sich also mit anderen Worten um die Querschnittsdicke des Gassackpaketes.

Vorzugsweise ist das Gassackmodul zur Anordnung an einem flächigen Bereich eines Trägers eingerichtet und vorgesehen, derart, dass sich der Gassack in seinem flächig ausgebreiteten Zustand entlang des flächigen Bereichs erstreckt. Bevorzugt bildet dieser Bereich einen Boden einer am Träger ausgebildeten Mulde. In einem Ausführungsbeispiel der Erfindung ist eine entlang der fiktiven Fläche bzw. des Gassackes erstreckte Abdeckung vorgesehen, die den Gassack vor dem Aufblasen überdeckt, wobei die Abdeckung dazu ausgebildet ist, sich entlang zumindest eines öffenbaren Bereiches zu öffnen, wenn der Gassack beim Aufblasen gegen die Abdeckung drückt. Bei einer derartigen Abdeckung kann es sich um eine so genannte Slush-Haut handeln, welche zur Verbesserung der Formbeständigkeit verstärkt ist. Die öffenbaren Bereiche können beispielsweise als Aufreißlinien ausgebildet sein, an denen entlang die Abdeckung aufreißt, um den Gassack freizugeben. Vorzugsweise ist eine derartige Abdeckung auf einen umlaufenden Randbereich der Mulde des Trägers geklebt.

Bevorzugt weist die vor dem Aufblasen des Gassackes evakuierte Hülle eine entlang der fiktiven Fläche erstreckte erste Seite auf, die - bezogen auf einen Einbauzustand des Gassackmoduls - einer zu schützenden Person zugewandt ist, und eine entlang der Fläche erstreckte zweite Seite, die bevorzugt parallel zur ersten Seite erstreckt ist, wobei die beiden Seiten durch den in der Hülle vor dem Aufblasen herrschenden Unterdruck quer zur Fläche gegeneinander gedrückt werden (unter Zwischenlage des Gassackes bzw. der Lagen des Gassackes), so dass die einzelnen übereinander liegenden und entlang der Fläche erstreckten Lagen des Gassackes quer zur Fläche gegeneinander gedrückt werden und eng aneinander anliegen. Hierdurch können sich die einzelnen Lagen entlang der Fläche nicht gegeneinander verschieben.

Bevorzugt weist die erste Seite einen äußersten umlaufenden ersten Randbereich auf und die zweite Seite einen äußersten umlaufenden zweiten Randbereich, über die die beiden Seiten miteinander verbunden sind, so dass eine flächig anordenbare Hülle ausgebildet wird. In einer Variante der Erfindung weist die Hülle entlang einer senkrecht auf der Hülle stehenden Ebene bezüglich einer zu schützenden Person eine konvexe Krümmung auf. Ein Krümmungsverlauf der Hülle kann dabei exakt an einen Oberflächenverlauf eines Trägers, an den der Gassack in seinem flächig ausgebreiteten Zustand mit samt der Hülle zu montieren ist, angepasst sein, wodurch er insbesondere flächig am Träger anliegen kann.

In einer alternativen Ausführungsform der Erfindung weist die Hülle im Querschnitt eine eckige Stufe auf. Die vorstehenden Formgebungen werden nach dem Evakuieren der verschlossenen Hülle durch mechanisches Verformen dem Gassackpaket, d.h., der Hülle mit dem darin befindlichen Gassack, aufgeprägt. Alternativ oder ergänzend kann die Raumform der Hülle nach dem Evakuieren durch eine bestimmte Formgebung der Hülle vor dem Evakuieren eingestellt bzw. beeinflusst werden. Aufgrund der Evakuierung der Hülle ist die solchermaßen hergestellte Raumform des Gassackpaketes formstabil.

Zum Befestigen des Gassackpaketes an einem Träger ist ein Flansch vorgesehen, mit dem das Gassackpaket derart am Träger befestigbar ist, dass der evakuierte Zustand der Hülle vor dem Aufblasen des Gassackes erhalten bleibt. Alternativ dazu kann die Befestigung derart erfolgen, dass das Vakuum nur bis zum Abschluss der Montage aufrechterhalten wird.

Vorzugsweise weist der Gassack eine Einströmöffnung auf, durch die zum Aufblasen des Gassackes entlang einer Einströmrichtung Gas in den Gassack eingeleitet werden kann, wobei die Einströmöffnung einen umlaufenden, die Einströmöffnung begrenzenden Randbereich aufweist, der zum Befestigen des Gassackes am Flansch dient.

Hierzu ist der Flansch bevorzugt ringförmig ausgebildet und weist ebenfalls einen umlaufenden Randbereich auf, der zur Anlage am Randbereich der Einströmöffnung vorgesehen ist, wobei der Flansch in einem vom Gassack umgebenen Innenraum des Gassackes angeordnet ist. Der Flansch ist weiterhin dazu eingerichtet und vorgesehen, den Randbereich der Einströmöffnung des Gassackes sowie einen am Randbereich anliegenden Teil der Hülle zum Festlegen des Gassackes an einem Träger entgegen der Einströmrichtung gegen den Träger bzw. eine darunter angeordnete Modulkomponente zu drücken.

Weiterhin wird das erfindungsgemäße Problem durch die Bereitstellung einer Gassackmodulanordnung gelöst, mit einem Träger und einem daran befestigten erfindungsgemäßen Gassackmodul, wobei sich der Gassack vor dem Aufblasen des Gassackes in seinem flächig ausgebreiteten Zustand entlang des Trägers erstreckt. Vorzugsweise weist der Träger einen flächigen Bereich auf, an dem entlang sich der Gassack vor dem Aufblasen in seinem flächig ausgebreiteten Zustand erstreckt und an dem der Gassack mitsamt seiner Hülle festgelegt ist. Vorzugsweise ist dieser flächige Bereich als ein Boden einer am Träger ausgebildeten Mulde ausgebildet. Diese Mulde ist bevorzugt vor dem Aufblasen des Gassackes durch eine Abdeckung überdeckt, wobei diese dazu ausgebildet ist, sich entlang zumindest eines öffenbaren Bereiches zu öffnen, wenn der Gassack beim Aufblasen gegen die Abdeckung drückt. Die Abdeckung ist an einem umlaufenden Randbereich der Mulde befestigt (beispielsweise durch Verkleben).

Bevorzugt ist der Träger als eine der folgenden Komponenten ausgebildet:
- ein Kraftfahrzeugteil,
- ein Karosseriebereich, insbesondere eine Säule einer Kraftfahrzeugkarosserie,
- eine Kraftfahrzeugverkleidung,
- ein Fahrzeughimmel,
- ein Dachrahmen,
- eine Tür,
- ein Sitz,
- ein Lenkradkranz,
- eine Instrumententafel eines Kraftfahrzeuges,
- eine Motorhaube eines Kraftfahrzeuges,
- ein Handschuhfachdeckel eines Kraftfahrzeuges,
- ein Sonnenblendschutz eines Kraftfahrzeuges,
- ein Gurt für ein Kraftfahrzeug,
- eine Bekleidung, insbesondere eine Motorradbekleidung,
- ein Motorradtank,
- eine separate Airbagtasche zum Nachrüsten eines Motorrads,
- ein Rucksack, und
- ein Motorradhelm.

Vorzugsweise ist das Gassackpaket an den Trägern der vorstehenden Art ebenfalls in einer an diesen Trägem ausgebildeten Mulde angeordnet und durch eine Abdeckung überdeckt. Bei der separaten Airbagtasche zum Nachrüsten eines Motorrads handelt es sich vorzugsweise um eine Tasche zur Befestigung an einem Tank des Motorrads, derart, dass ein flächiger Bereich der Airbagtasche dem Motorradfahrer zugewandt ist, wobei der an diesem Bereich angeordnete Gassack zwischen dem Tank des Motorrads und dem Motorradfahrer in einer gefährlichen Situation aufblasbar ist.

Im Falle eines Trägers in Form einer Motorhaube eines Kraftfahrzeuges dient der Gassack zum Schutz des Kraftfahrzeuges und einer mit dem Kraftfahrzeug kollidierenden Person bzw. eines Kollisionsobjektes. Bei einem Rucksack oder einem Motorradhelm als Träger des erfindungsgemäßen Gassackmoduls, ist der Gassack dazu ausgelegt, bevorzugt den Nacken- und oberen Wirbelsäulenbereich des Trägers des Rucksackes bzw. des Motorradhelmes zu stützen und zu stabilisieren.

Weiterhin wird das erfindungsgemäße Problem durch ein Verfahren zum Herstellen eines erfindungsgemäßen Gassackmoduls gelöst. Das erfindungsgemäße Verfahren sieht dabei die folgenden Schritte vor:
- Bereitstellen eines flexiblen, durch Falten mehrlagig anordenbaren Gassackes in einem flächig ausgebreiteten Zustand, und
- Umhüllen des Gassackes mit einer evakuierbaren Hülle und Evakuieren der Hülle derart, dass sich der Gassack in seinem flächig ausgebreiteten Zustand formbeständig entlang einer vordefinierbaren Fläche erstreckt.
- weiterhin ist vorgesehen, dass die evakuierte Hülle mit samt dem darin befindlichen Gassack mechanisch verformt wird, beispielsweise durch Pressen (ggf. unter Erwärmen) in einer Presse, derart, dass sich der Gassack nach dem Verformen in seinem flächig ausgebreiteten Zustand formbeständig entlang einer weiteren vordefinierbaren (fiktiven) Fläche erstreckt, die insbesondere von der Fläche verschieden ist. D.h., während die Fläche insbesondere als eine Ebene ausgebildet sein kann, kann die weitere Fläche einen komplexeren Krümmungsverlauf aufweisen.

Bevorzugt erstreckt sich der Gassack (nach dem Umhüllen des Gassackes mit der Hülle und dem Evakuieren der Hülle) in seinem flächig ausgebreiteten Zustand formbeständig entlang einer vordefinierbaren Fläche, wobei zumindest über einen Teil der Fläche nur zwei Lagen des Gassackes quer zur Fläche übereinander liegen.

Auf diese Weise kann der Gassack bzw. das Gassackpaket leicht an die Geometrie des jeweiligen Einbauortes (Träger) angepasst werden. Dieses Verformen kann dabei direkt vor der Montage an einen Träger erfolgen oder direkt nach dem Evakuieren der Hülle, wobei die Hülle mit Vorteil aufgrund ihrer Formbeständigkeit in einem vorgeformten Zustand lagerbar ist. D.h., das erfindungsgemäße Gassackpaket ermöglicht eine große Variantenvielfalt hinsichtlich eines möglichen Einbauortes und kann im bereits an den jeweiligen Einsatzort angepassten Zustand vorrätig gehalten werden.

Alternativ oder ergänzend ist vorgesehen, dass das Gassackpaket durch eine entsprechend ausgeformte Hülle bzw. durch das Einbringen in eine Form bereits beim Evakuieren in eine gekrümmte Raumform gebracht wird.

Beim erfindungsgemäßen Verfahren kann der Gassack zunächst in einem flächig ausgebreiteten Zustand in der Hülle angeordnet werden, die hiernach evakuiert und nach dem Evakuieren insbesondere durch Verschweißen verschlossen wird. Vorzugsweise besteht die Hülle hierbei aus einem (thermoplastischen) Kunststoff. Anstelle eines Anordnens des Gassackes in einem flächig ausgebreiteten Zustand in der Hülle, kann der Gassack auch zunächst in einem flächig ausgebreiteten Zustand angeordnet und sodann mit der Hülle umgeben werden. Hierbei kann der Gassack in seinem flächig ausgebreiteten Zustand auf eine Hüllenlage der Hülle aufgelegt werden, wobei die Hüllenlage über einen äußeren umlaufenden Rand des Gassackes hinausragt, so dass sie auf den Gassack gefaltet werden kann. Hierdurch wird der Gassack in seinem flächig ausgebreiteten Zustand zwischen einem oberen und einem unteren Abschnitt der Hüllenlage angeordnet, wobei der obere und der mir dem oberen Abschnitt verbundene untere Abschnitt der Hüllenlage jeweils einen äußeren Randbereich aufweisen, die beim Falten bevorzugt deckungsgleich aufeinander zu liegen kommen. Durch ein Verbinden der beiden äußeren Randbereiche der Hüllenlage wird eine Hülle ausgebildet, die den Gassack einschließt, wobei zwei aneinander anliegende Abschnitte der beiden äußeren Randbereiche zwecks Ausbildung einer Absaugöffnung zum Evakuieren der Hülle unverbunden bleiben können. Nach dem Evakuieren kann diese Absaugöffnung (durch Verbinden der beiden Abschnitte miteinander) verschlossen werden. Statt einer einzigen Hüllenlage können natürlich auch zwei Hüllenlagen vorgesehen werden, zwischen denen der Gassack angeordnet wird und die anschließend über ihre umlaufenden äußersten Randbereiche zur Ausbildung der Hülle mit einander verbunden werden, insbesondere durch Verschweißen oder Verkleben.

Zur Beeinflussung der Entfaltung des Gassackes beim Aufblasen oder zur Anpassung an die Größe eines Unterbringungsraumes des Gassackes (z.B. eine Mulde eines Trägers) kann dieser definiert gefaltet bzw. umgeschlagen werden. Auch nach diesen Faltungen bleibt das Gassackpaket nach dem Evakuieren formbar. Durch das Evakuieren der den Gassack umhüllenden Hülle werden die Falten im Gassack fixiert und so exakt definierbare, reproduzierbare Eigenschaften bei allen verbauten Gassackmodulen geschaffen. Hierdurch ist das Öffnungsverhalten der Abdeckung und die Luftsackpositionierung gegenüber einem zu schützenden Insassen bei der Entfaltung des Gassackes robust einstellbar.

Die dargestellten Merkmale und Vorteile der Erfindung sollen anhand der nachfolgenden Figurenbeschreibung von Ausführungsbeispielen verdeutlicht werden. Es zeigen:
- Fig. 1: ein Gassackpaket des erfindungsgemäßen Gassackmoduls, umfassend einen Gassack, eine den Gassack umgebende Hülle sowie einen Flansch zum Festlegen des Gassackpakets an einem Träger des Gassackpakets,
- Fig. 1A: eine Abwandlung des in der Figur 1 gezeigten Gassackpaketes,
- Fig. 2: ein gewölbtes Gassackpaket der in der Figur 1 gezeigten Art,
- Fig. 3: eine schematische Schnittansicht eines zweifach abgewinkelten Gassackpakets der in der Figur 1 bzw. 2 gezeigten Art,
- Fig. 4: eine schematische Schnittansicht eines Gassackpakets der in den Figuren 1 bis 3 gezeigten Art, mit einem Gassack, dessen einem zu schützenden Insassen zugewandte Oberseite in Falten gelegt ist,
- Fix. 5: eine schematische Schnittansicht eines Gassackpakets der in den Figuren 1 bis 4 gezeigten Art, mit einem flächig ausgebreiteten Gassack, der an einem Randbereich des Gassackes eingeschlagen ist,
- Fig. 6: eine schematische Schnittansicht eines erfindungsgemäßen Gassackmoduls mit einem Gassackpaket der in den Figuren 1 bis 5 gezeigten Art, das in einer Mulde einer Instrumententafel angeordnet ist, und
- Fig. 7: eine schematische, perspektivische Ansicht eines Gassackmoduls der in der Figur 6 gezeigten Art, dessen Gassack dazu eingerichtet und vorgesehen ist, die Knie eines Fahrzeuginsassen zu schützen.

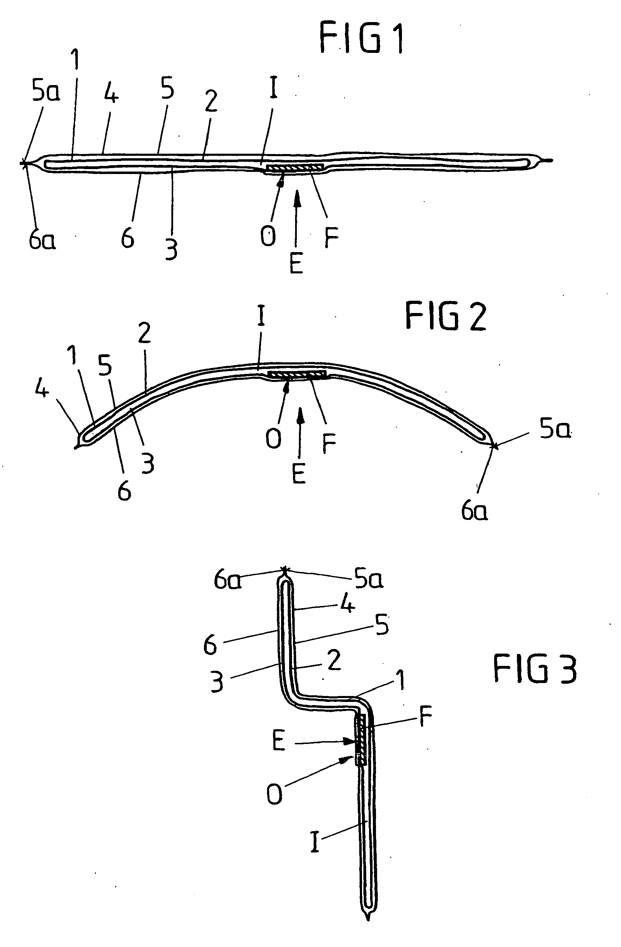

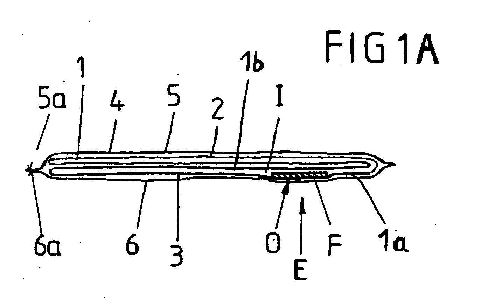

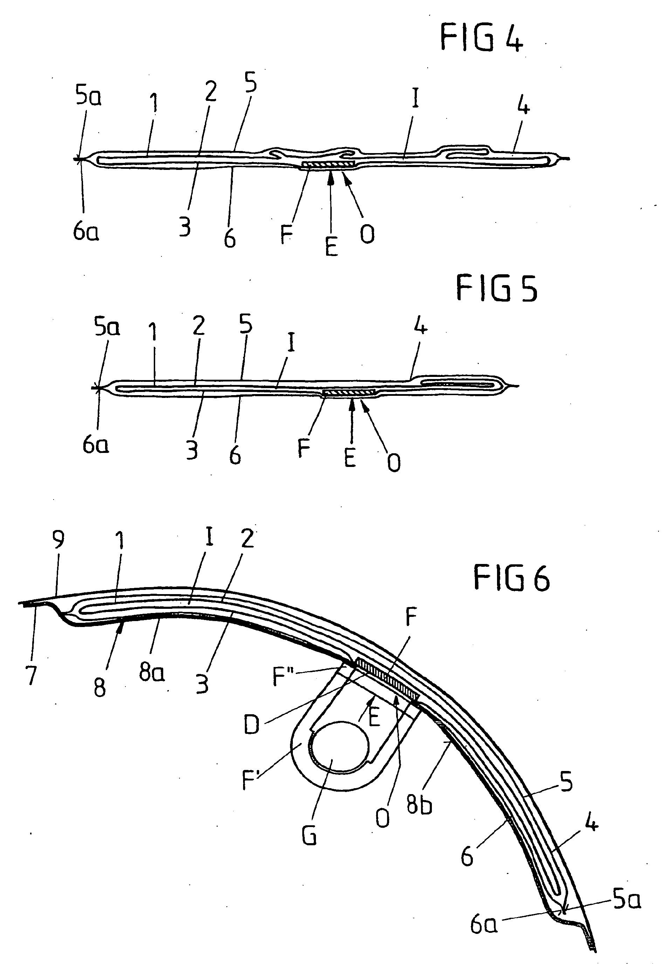

Figur 1 zeigt eine Schnittansicht eines Gassackpakets umfassend einen Gassack 1, der in einem flächig ausgebreiteten Zustand angeordnet ist, in dem er sich entlang einer fiktiven (planen) Fläche erstreckt und von einer Hülle 4 umgeben ist. Der Gassack 1 ist zum Schutz einer Person mit Gas aufblasbar, das durch eine Einströmöffnung O entlang einer Einströmrichtung E in den Gassack 1 eingeleitet werden kann, wobei vor dem Aufblasen des Gassackes die Hülle 4 evakuiert ist, so dass der flächig ausgebreitete Zustand des Gassackes 1 formbeständig ist. Dabei verschließt die Hülle 4 auch die Einströmöffnung O des Gassackes 1. Beim Aufblasen des Gassackes 1 wird ein die Einströmöffnung O bedeckender Teil der Hülle 4 des Gassackes 1 durch die heißen Gase zerstört, so dass Gas durch die Einströmöffnung O in einen vom Gassack 1 umgebenen Innenraum I gelangen kann. Bei Verwendung eines Kaltgases können zusätzliche Mittel vorgesehen sein, die den die Einströmöffnung O bedeckenden Teil der Hülle 4 durchtrennen. Mittels eines am Gassack festgelegten Flansches F ist der Gassack 1 samt Hülle 4 an einem Träger 7 festlegbar (vergleiche Figur 6), bei dem es sich insbesondere um eine Instrumententafel eines Kraftfahrzeuges handelt.

Der Gassack 1 weist in seinem flächig ausgebreiteten Zustand, den er vor dem Aufblasen einnimmt, eine einem zu schützenden Insassen zugewandte Oberseite 2 und eine dem Insassen abgewandte Unterseite 3 auf, die aufgrund der Vakumierung der Hülle 4 parallel zueinander verlaufen und eng aneinander anliegen. Hierbei können die Oberseite 2 und die Unterseite 3 des Gassackes 1 aufgrund des in der Hülle 4 herrschenden Unterdruckes, der die Oberseite 2 und die Unterseite 3 gegeneinander drückt, nicht gegeneinander verschoben werden. Dies bedingt eine Formbeständigkeit des flächig ausgebreiteten Zustandes des Gassackes 1 vor dem Aufblasen. Der der Befestigung des Gassackpakets dienende Flansch F ist flächig ringförmig ausgebildet und liegt mit einem umlaufenden Randbereich vom Innenraum I her an einem umlaufenden Randbereich der Einströmöffnung O des Gassackes 1 an. Dabei ist der Flansch F an einem trägerseitigen Anschlussflansch F' (vergleiche Figur 6) festlegbar, und zwar derart, dass der in der Hülle 4 vor dem Aufblasen herrschende Unterdruck bestehen bleibt.

Die den Gassack 1 in seinem flächig ausgebreiteten Zustand umhüllende Hülle 4 ist zumindest aus einer ersten Seite 5 und einer zweiten Seite 6 zusammengesetzt, wobei die beiden Seiten 5, 6 der Hülle 4 entlang der fiktiven Fläche, entlang der sich der Gassack 1 in seinem flächig ausgebreiteten Zustand erstreckt, über einen äußeren umlaufenden Rand des Gassackes 1 hinausragen. Dabei ist die erste Seite 5 über einen äußersten umlaufenden ersten Randbereich 5a mit einem äußersten umlaufenden zweiten Randbereich 6a der zweiten Seite 6 der Hülle 4 zwecks Ausbildung der Hülle 4 verbunden. Bei der Herstellung des Gassackmoduls kann hierbei zunächst die zweite Seite 6 der Hülle 4 in einer Ebene angeordnet werden, auf die sodann der Gassack 1 flächig ausgebreitet wird, so dass die Unterseite 3 des Gassackes 1 auf der zweiten Seite 6 der Hülle 4 aufliegt, wobei der äußere umlaufende Randbereich 6a der zweiten Seite 6 der Hülle 4 über einen äußeren umlaufenden Rand des Gassackes 1 hinaussteht. Auf die Oberseite 2 des Gassackes 1 wird sodann die erste Seite 5 der Hülle 4 aufgelegt und deren äußerer umlaufender Randbereich 5a mit dem äußeren umlaufenden zweiten Randbereich 6a der zweiten Seite der Hülle 4 verbunden, insbesondere mit diesem verschweißt (d.h., die Hülle 4 besteht vorzugsweise aus einem thermoplastischen Kunststoff). Hierbei kann ein Abschnitt der beiden Randbereiche 5a, 6a unverbunden bleiben, und somit eine Absaugöffnung umgeben (in der Figur 1 nicht gezeigt), durch die hindurch nach dem Anordnen des Gassackes 1 in der Hülle 4 die in der Hülle 4 befindliche Luft abgesaugt werden kann. Aufgrund des dabei sich einstellenden Unterdrucks in der Hülle 4 drückt die erste Seite 5 der Hülle 4 gegen die Oberseite 2 des Gassackes 1 bzw. die zweite Seite 6 gegen die Unterseite 3 des Gassackes 1, so dass die Oberseite 2 und die Unterseite 3 des Gassackes 1 gegeneinander gedrückt werden und daher entlang der fiktiven Fläche, entlang der die Oberseite 2 und die Unterseite 3 verlaufen, nicht gegeneinander verschoben werden können. Dies bedingt eine hinreichende Formstabilität des flächig ausgebreiteten Zustandes des Gassackes 1 nach dem Evakuieren der Hülle 4. Im Anschluss an das Evakuieren der Hülle 4 wird die Absaugöffnung verschlossen. Im Falle einer Absaugöffnung, die zwischen den beiden Randbereichen 5a, 6a ausgebildet ist, kann diese Absaugöffnung durch ein vollständiges Verschweißen der beiden Randbereiche 5a, 6a der Hülle 4 verschlossen werden.

Alternativ zu der beschriebenen Ausbildung der Hülle 4 für den Gassack 1, kann diese bereits vorgefertigt in Form einer einseitig offenen Tüte vorliegen. Vor dem Evakuieren wird in diesem Fall der Gassack 1 in der Hülle 4 verstaut und in der gewünschten Form angeordnet.

Figur 1A zeigt eine schematische Schnittansicht eines Gassackpaketes der in der Figur 1 gezeigten Art, wobei im Unterschied zur Figur 1 der Gassack 1 einmal auf sich selbst gefaltet ist, d.h., quer zur Fläche, entlang der sich der Gassack 1 erstreckt, liegen vier Lagen des Gassackes 1 übereinander. Hierzu kann der Gassack 1 zunächst flach (und faltenfrei) auf einer Unterlage ausgebreitet werden, so dass eine untere Seite 1a des Gassackes 1 an der Unterlage anliegt und eine obere Seite 1b des Gassackes 1 der Unterlage abgewandt ist. Sodann wird der Gassack 1 derart gefaltet, dass die obere Seite 1b auf sich selbst zu liegen kommt und die untere Seite 1a des Gassackes 1 die Oberseite 2 und die Unterseite 3 des Gassackes 1 bildet (vgl. Figur 1).

Figur 2 zeigt eine schematische Schnittansicht eines Gassackpakets der in der Figur 1 gezeigten Art, wobei im Unterschied zur Figur 1 die Hülle 4 samt dem darin angeordneten Gassack 1 im Querschnitt konvex gekrümmt ist, d.h., die Hülle 4 weist eine Wölbung in Richtung eines zu schützenden Insassen auf. Demgegenüber weist das in der Figur 3 im Querschnitt gezeigte Gassackpaket, umfassend die Hülle 4 und den Gassack 1, einen gestuften bzw. zweifach abgewinkelten Verlauf auf, d.h., die flächig ausgebildete Hülle 4 weist einen ersten Abschnitt auf, der sich in einer Erstreckungsebene erstreckt und einen senkrecht zu dieser Erstreckungsebene verlaufenden mittleren Abschnitt, der in einen wiederum parallel zur Erstreckungsebene verlaufenden zweiten Abschnitt der Hülle 4 übergeht. D.h., der erste und der zweite Abschnitt sind quer zur Erstreckungsebene versetzt zueinander angeordnet. Die in den Figuren 2 und 3 gezeigten Raumformen des Gassackpakets bzw. der Hülle 4 samt dem darin angeordneten Gassack 1 (und Flansch F) stellen nur eine Auswahl einer Vielzahl von möglichen (entlang einer Fläche erstreckter) Raumformen des Gassackpakets dar. Dieses kann nämlich aufgrund der Evakuierung der Hülle 4 reversibel in eine bestimmte Raumform mechanisch verformt werden, die aufgrund der Evakuierung der Hülle 4 jeweils formbeständig ist. Oder anders gesagt, das Gassackpaket kann an einen beliebigen Oberflächenverlauf eines Trägers des Gassackpakets angepasst werden. Da das Gassackpaket quer zur fiktiven Fläche, entlang der sich das Gassackpaket erstreckt, nur wenige Millimeter dick ist, vorzugsweise weniger als 1 cm, kann das erfindungsgemäße Gassackmodul insbesondere überfall dort eingesetzt werden, wo der zur Verfügung stehende Bauraum entlang einer quer zum flächig ausgebreiteten Gassack 1 verlaufenden Hauptentfaltungsrichtung des Gassackes 1 begrenzt ist. Vorteilhaft ist auch, dass der Gasgenerator G bei einem äußerst flachen Bauraum beabstandet zum Gassack 1 angeordnet werden kann. Dabei kann der Gasgenerator G über eine Gasleiteinrichtung (z. B. einen Schlauch) mit dem Gassack 1 verbunden sein.

Figur 4 zeigt eine schematische Schnittansicht einer Abwandlung des in den Figuren 1 bis 3 gezeigten Gassackmoduls, bei dem im Unterschied zur Figur 1 die Oberseite 2 des Gassackes 1 nicht plan ausgebreitet ist, sondern entlang der Oberseite 2 verlaufende Falten aufweist. Derartige Falten der Oberseite 2 des Gassackes 1 können zur Anpassung an die Größe eines Unterbringungsraumes des Gassackpakets dienen. Weiterhin kann durch den Verlauf der Falten bezüglich der Einströmöffnung O des Gassackes 1 die Art und Weise, wie sich der Gassack 1 beim Befüllen mit Gas entfaltet, beeinflusst werden. Vorteilhaft an der Evakuierung der Hülle 4 ist dabei, dass die Falten durch die Evakuierung der Hülle 4 nicht gegeneinander verrücken können, d.h., ihre Positionen zueinander bzw. zur Einströmöffnung O sind (vor dem Aufblasen des Gassackes 1) konstant. Durch eine derartige Vorfaltung ist die Positionierung des Gassackes 1 in Bezug auf einen zu schützenden Insassen robust einstellbar und reproduzierbar. Natürlich ist es auch möglich, den Gassack 1 gemäß der Figur 5 an einem Randbereich einzuschlagen, um den Gassack 1 in seinem flächig ausgebreiteten Zustand an einen zur Verfügung stehenden Bauraum anzupassen.

Die einfache Faltung des Gassackes 1 gemäß Figur 5 stellt eine spezielle Ausführung der Faltung nach Figur 1A dar, bei der die Anordnung der vier Gassacklagen übereinander nur über einen Teilbereich der Fläche, entlang der sich der Gassack 1 erstreckt, vorhanden ist. Weiterhin ist es denkbar, den Gassack 1 an mehreren Randbereichen entsprechend der Figur 5 einzuschlagen, z.B. an zwei einander gegenüberliegenden Randbereichen. Auch auf diese Weise (mehrfaches Einschlagen an Randbereichen) kann erreicht werden, dass der Gassack 1 über die besagte Fläche im Wesentlichen vierlagig angeordnet ist.

Figur 6 zeigt eine schematische Schnittansicht eines Gassackmoduls der in den Figuren 1 bis 5 gezeigten Art, das an einen Träger 7 in Form einer Instrumententafel montiert ist. Die Instrumententafel 7 ist im Querschnitt konvex gewölbt, wobei die Wölbung zu einem zu schützenden Insassen hin ausgebildet ist. Dabei weist die Instrumententafel 7 eine flächige Mulde 8 konstanter Tiefe auf, mit einem entsprechend konvex gekrümmten Boden 8a, der einen flächigen Bereich bildet, an dem die Hülle 4 mit dem darin befindlichen Gassack 1 festgelegt ist. Hierbei liegt die zweite Seite 6 der Hülle 4 am Boden 8a der Mulde 8 flächig an. Das in der Mulde 8 angeordnete Gassackpaket füllt diese im Wesentlichen vollständig aus. Damit der Gassack 1 gasleitend mit einem Gasgenerator G verbunden werden kann, ist an dem Boden 8a der Mulde 8 eine Durchgangsöffnung D ausgebildet, an der von einer dem Gassack 1 abgewandten Rückseite 8b des Bodens 8a her ein Anschlussflansch F' festgelegt ist. Dieser bildet eine Halterung für den Gasgenerator G, der derart am Flansch F' angeordnet ist, dass aus dem Gasgenerator G austretendes Gas entlang der Einströmrichtung E zur Durchgangsöffnung D des Bodens 8a gelangen kann. Der Flansch F' weist dabei einen umlaufenden Randbereich F" auf, der an einem umlaufenden, die Durchgangsöffnung D berandenen Randbereich der Rückseite 8b flächig anliegt. Der entsprechend der Figur 1 ausgebildete Flansch F ist an diesem Randbereich F" des Anschlussflansches F' festgelegt, so dass er entgegen der Einströmrichtung E mit seinem umlaufenden Randbereich gegen den Randbereich F" des Anschlussflansches F' drückt. Hierbei wird der Randbereich der Einströmöffnung O sowie ein Teil der die Einströmöffnung O bedeckenden Hülle 4 (und zwar ein Teil der Unterseite 6 der Hülle 4) entlang der Einströmrichtung E zwischen dem Boden 8a der Instrumententafel 7 und dem Flansch F eingeklemmt. Zur Verbindung zwischen dem Flansch F und dem umlaufenden Randbereich F" des Anschlussflansches F' können vom Flansch F abragende Befestigungselemente dienen, die derart mit dem Anschlussflansch F' verbunden sind, dass der in der Hülle 4 vor dem Aufblasen des Gassackes 1 herrschende Unterdruck bestehen bleibt.

Zum Abdecken des Gassackes 1 vor dem Aufblasen des Gassackes 1, ist eine Abdeckung (zum Beispiel eine verstärkte Slush-Haut) derart an der Instrumententafel 7 angeordnet, dass sie die Mulde 8 der Instrumententafel 7 überdeckt, wobei die Abdeckung entlang einer Hauptentfaltungsrichtung, entlang der sich der Gassack 1 beim Entfalten auf einen zu schützenden Insassen zu bewegt, zwischen der Mulde 8 und dem zu schützenden Insassen angeordnet ist. Die Abdeckung 9 ist mit einem die Mulde 8 umlaufenden Bereich der Instrumententafel 7 verbunden, insbesondere verklebt. Dabei weist die Abdeckung 9 Aufreißlinien auf, an denen entlang sie zum Freigeben des Gassackes 1 aufreißt, wenn dieser sich beim Befüllen mit Gas ausdehnt und (entlang der Hauptentfaltungsrichtung, d.h., quer zur Fläche) gegen die Abdeckung 9 drückt.

Das in der Figur 6 gezeigte Gassackmodul ist zum Einsatz als Beifahrergassackmodul ausgelegt. Die Verwendung des Gassackmoduls ist jedoch nicht auf den Beifahrerbereich beschränkt. Ein Einsatz des vorstehend beschriebenen Gassackmoduls ist überall möglich, insbesondere dort, wo in der Höhe (zum Beispiel entlang einer Hauptentfaltungsrichtung des Gassackes bzw. quer zur Fläche) ein nur begrenzter Bauraum zur Verfügung steht. Der Gasgenerator G kann dabei auch beabstandet zur Durchgangsöffnung D bzw. beabstandet zum Gassack 1 angeordnet sein und über eine Gasleiteinrichtung (zum Beispiel eine flexible Schlauchleitung) mit diesem verbunden sein.

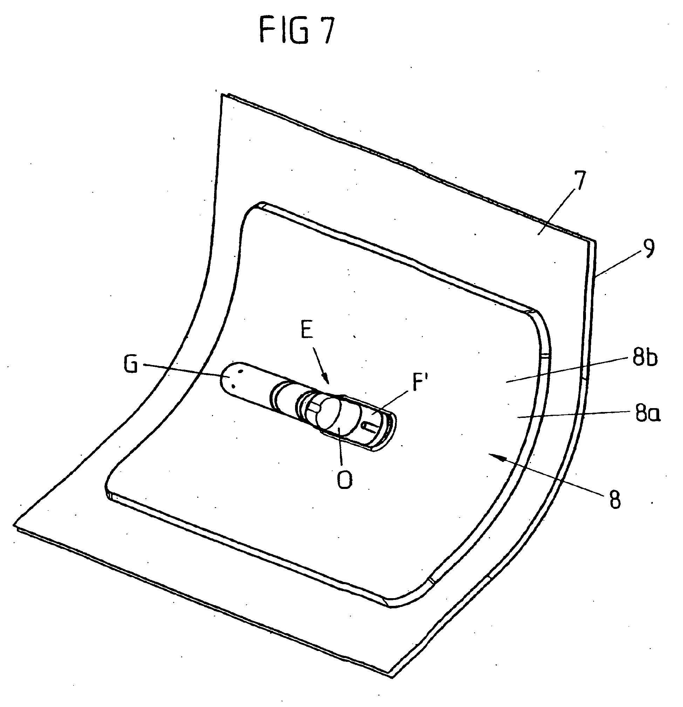

Figur 7 zeigt eine perspektivische Ansicht eines Gassackmoduls der in der Figur 6 beschriebenen Art von der Rückseite 8b der Mulde 8 her. Hierbei handelt es sich im Unterschied zur Figur 6 um ein Gassackmodul, das für einen Einsatz als Kniegassackmodul eingerichtet und vorgesehen ist. Dementsprechend ist die Mulde 8 der Instrumententafel 7 etwa auf Höhe der Knie eines Fahrzeuginsassen angeordnet und diesen zugewandt. Im Unterschied zur Figur 6 ist dabei der Flansch F', der an der Rückseite 8b des Bodens 8a der Mulde 8, und zwar an der Durchgangsöffnung D, festgelegt ist, als eine Halbschale ausgebildet, in die ein längs erstreckter, zylindrischer Gasgenerator G entlang der Rückseite 8b (d.h. quer zu Einströmrichtung E) einschiebbar ist. Hierdurch wird eine besonders schnelle Montage des Gasgenerators G ermöglicht.

## Patentansprüche

1. Gassackmodul, insbesondere für ein Kraftfahrzeug, mit einem flexiblen, durch Falten mehrlagig anordenbaren Gassack, der zum Schutz einer Person mit Gas aufblasbar ist, wobei der Gassack vor dem Aufblasen in einem flächig ausgebreiteten Zustand angeordnet ist, in dem er sich entlang einer vordefinierbaren Fläche erstreckt, wobei der Gassack (1) vor dem Aufblasen von einer evakuierten Hülle (4) derart umgeben ist, dass der flächig ausgebreitete Zustand des Gassackes (1) formbeständig ist,
**dadurch gekennzeichnet,**
**dass** die Hülle (4) im evakuierten Zustand mit samt dem Gassack (1) mechanisch verformbar ausgebildet ist, wobei eine jeweilige, durch Verformen erzeugte Raumform eines die Hülle (4) und den darin befindlichen Gassack (1) umfassenden Gassackpakets formbeständig ist.

2. Gassackmodul nach Anspruch 1, **dadurch gekennzeichnet, dass** der Gassack (1) in seinem flächig ausgebreiteten Zustand nicht oder nur geringfügig gefaltet ist.

3. Gassackmodul nach einem der vorangegangenen Ansprüche, **dadurch gekennzeichnet, dass** der Gassack (1) vor dem Aufblasen in einem flächig ausgebreiteten Zustand angeordnet ist, in dem er sich entlang einer vordefinierbaren Fläche erstreckt, so dass zumindest über einen Teil der Fläche nur zwei Lagen des Gassackes quer zur Fläche übereinander liegen.

4. Gassackmodul nach einem der vorangegangenen Ansprüche, **dadurch gekennzeichnet, dass** der Gassack (1) vor dem Aufblasen in einem flächig ausgebreiteten Zustand angeordnet ist, in dem er sich entlang einer vordefinierbaren Fläche erstreckt, so dass über einen Großteil der Fläche nur zwei Lagen des Gassackes (1) quer zur Fläche übereinander liegen.

5. Gassackmodul nach einem der vorangegangenen Ansprüche, **dadurch gekennzeichnet, dass** an keiner Stelle der Fläche mehr als zwei Lagen des Gassackes (1) quer zur Fläche übereinander liegen.

6. Gassackmodul nach einem der vorangegangenen Ansprüche, **dadurch gekennzeichnet, dass** an keiner Stelle der Fläche mehr als vier Lagen des Gassackes (1) quer zur Fläche übereinander liegen.

7. Gassackmodul nach einem der vorangegangenen Ansprüche, **dadurch gekennzeichnet, dass** der Gassack (1) in seinem flächig ausgebreiteten Zustand zumindest einmal auf sich selbst gefaltet ist, so dass quer zur Fläche vier Lagen des Gassackes übereinander liegen.

8. Gassackmodul nach einem der Ansprüche 3 bis 7, **dadurch gekennzeichnet, dass** die Lagen des Gassackes (1) eng aneinander anliegen.

9. Gassackmodul nach einem der vorangegangenen Ansprüche, **dadurch gekennzeichnet, dass** ein die evakuierte Hülle (4) und den darin befindlichen Gassack (1) umfassendes Gassackpaket quer zur Fläche weniger als 1 cm dick ist.

10. Gassackmodul nach einem der vorangegangenen Ansprüche, **dadurch gekennzeichnet, dass** das Gassackmodul zur Anordnung an einem entlang der Fläche erstreckten Bereich (8a) eines Trägers (7) eingerichtet und vorgesehen ist.

11. Gassackmodul nach Anspruch 10, **dadurch gekennzeichnet, dass** der Bereich ein Boden (8a) einer am Träger (7) ausgebildeten Mulde (8) ist.

12. Gassackmodul nach einem der vorangegangenen Ansprüche, **gekennzeichnet durch** eine entlang der Fläche erstreckte Abdeckung (9), die den Gassack (1) vor dem Aufblasen überdeckt, wobei die Abdeckung (9) dazu ausgebildet ist, sich entlang zumindest eines öffenbaren Bereiches zu öffnen, wenn der Gassack (1) beim Aufblasen gegen die Abdeckung (9) drückt.

13. Gassackmodul nach einem der vorangegangenen Ansprüche, **dadurch gekennzeichnet, dass** die Hülle (4) eine entlang der Fläche erstreckte erste Seite (5) aufweist, die - bezogen auf einen Einbauzustand des Gassackmoduls - einer zu schützenden Person zugewandt ist und eine entlang der Fläche erstreckte zweite Seite (6), die im Wesentlichen parallel zur ersten Seite (5) erstreckt ist.

14. Gassackmodul nach einem der vorangegangenen Ansprüche, **dadurch gekennzeichnet, dass** die beiden Seiten (5, 6) durch den in der Hülle (4) vor dem Aufblasen herrschenden Unterdruck quer zur Fläche gegeneinander gedrückt werden, so dass die einzelnen, übereinander liegenden und entlang der Fläche erstreckten Lagen des Gassackes (1) quer zur Fläche gegeneinander gedrückt werden und eng aneinander anliegen.

15. Gassackmodul nach Anspruch 13 oder 14, **dadurch gekennzeichnet, dass** die erste Seite (5) einen äußersten ersten Randbereich (5a) aufweist, und dass die zweite Seite (6) einen äußersten zweiten Randbereich (6a) aufweist, wobei die beiden Seiten (5, 6) über die beiden Randbereiche (5a, 6a) miteinander verbunden sind.

16. Gassackmodul nach einem der vorangegangenen Ansprüche, **dadurch gekennzeichnet, dass** die Hülle (4) im Querschnitt ein konvexe Krümmung aufweist.

17. Gassackmodul nach einem der vorangegangenen Ansprüche, **dadurch gekennzeichnet, dass** die Hülle (4) im Querschnitt eine Stufe aufweist.

18. Gassackmodul nach Anspruch 10 oder Anspruch 11 bis 17 soweit rückbezogen auf Anspruch 10, **gekennzeichnet durch** einen Flansch (F) zum Befestigen des Gassackes (1) am Träger (7).

19. Gassackmodul nach einem der vorangegangenen Ansprüche, **dadurch gekennzeichnet, dass** der Gassack (1) eine Einströmöffnung (O) aufweist, durch die entlang einer Einströmrichtung (E) Gas in den Gassack (1) zum Aufblasen des Gassackes (1) eingeleitet werden kann, wobei die Einströmöffnung (O) einen umlaufenden Randbereich aufweist.

20. Gassackmodul nach Anspruch 18 und 19, **dadurch gekennzeichnet, dass** der Flansch (F) ringförmig ausgebildet ist und einen umlaufenden Randbereich aufweist, der zur Anlage am Randbereich der Einströmöffnung (O) vorgesehen ist derart, dass der Flansch (F) in einem vom Gassack (1) umgebenen Innenraum (I) des Gassackes (1) angeordnet ist.

21. Gassackmodul nach Anspruch 19 und 20, **dadurch gekennzeichnet, dass** der Flansch (F) zum Festlegen des Gassackes (1) an einem Träger (7) dazu ausgebildet ist, den Randbereich der Einströmöffnung (O) des Gassackes (1) entlang der Einströmrichtung (E) gegen den Träger (7) zu drücken.

22. Gassackmodul nach einem der vorangegangenen Ansprüche, **dadurch gekennzeichnet, dass** die Hülle (4) flexibel ausgebildet ist.

23. Gassackmodul nach einem der vorangegangenen Ansprüche, **dadurch gekennzeichnet, dass** die Hülle (4) folienartig ausgebildet ist, insbesondere aus einem Kunststoff.

24. Gassackmodulanordnung mit einem Träger und einem daran befestigten Gassackmodul nach einem der vorangegangenen Ansprüche, **dadurch gekennzeichnet, dass** sich der Gassack (1) vor dem Aufblasen in seinem flächig ausgebreiteten Zustand entlang des Trägers (7) erstreckt.

25. Gassackmodulanordnung nach Anspruch 24, **dadurch gekennzeichnet, dass** der Träger (7) einen flächigen Bereich (8a) aufweist, an dem entlang sich der Gassack (1) vor dem Aufblasen in seinem flächig ausgebreiteten Zustand erstreckt.

26. Gassackmodulanordnung nach Anspruch 25, **dadurch gekennzeichnet, dass** der flächige Bereich ein Boden (8a) einer am Träger (7) ausgebildeten Mulde (8) ist.

27. Gassackmodulanordnung nach Anspruch 26, **gekennzeichnet durch** eine Abdeckung (9), die vor dem Aufblasen des Gassackes (1) die Mulde (8) überdeckt, wobei die Abdeckung (9) dazu ausgebildet ist, sich entlang zumindest eines öffenbaren Bereiches zu öffnen, wenn der Gassack (1) beim Aufblasen gegen die Abdeckung (9) drückt.

28. Gassackmodulanordnung nach einem der Ansprüche 24 bis 27, **dadurch gekennzeichnet, dass** der Träger als eine der folgenden Komponenten ausgebildet ist:
- ein Kraftfahrzeugteil,
- ein Karosseriebereich, insbesondere eine Säule einer Kraftfahrzeugkarosserie,
- eine Kraftfahrzeugsverkleidung,
- ein Fahrzeughimmel,
- ein Dachrahmen,
- eine Fahrzeugtür,
- ein Fahrzeugsitz,
- ein Lenkradkranz,
- eine Instrumententafel,
- eine Motorhaube,
- ein Handschuhfachdeckel,
- ein Sonnenblendschutz,
- ein Gurt,
- eine Bekleidung, insbesondere Motorradbekleidung,
- ein Motorradtank,
- eine separate Airbagtasche zum Nachrüsten eines Motorrads,
- ein Rucksack, oder
- ein Motorradhelm.

29. Verfahren zum Herstellen eines Gassackmoduls nach einem der Ansprüche 1 bis 23, umfassend die folgenden Schritte:
- Bereitstellen eines flexiblen, durch Falten mehrlagig anordenbaren Gassackes (1) in einem flächig ausgebreiteten Zustand, und
- Umhüllen des Gassackes (1) mit einer evakuierbaren Hülle (4) und Evakuieren der Hülle (4) derart, dass sich der Gassack (1) in seinem flächig ausgebreiteten Zustand formbeständig entlang einer vordefinierbaren Fläche erstreckt,
- wobei die evakuierte Hülle (4) mit samt dem darin befindlichen Gassack (1) mechanisch verformt wird derart, dass sich der Gassack (1) nach dem Verformen in seinem flächig ausgebreiteten Zustand formbeständig entlang einer weiteren vordefinierbaren Fläche erstreckt.

## Claims

1. An airbag module, in particular for a motor vehicle, comprising a flexible airbag which may be arranged in a multi-layered manner by folding and which may be inflated with gas to protect a person, the airbag before inflation being arranged in a planar spread-out state, in which it extends along a predefinable surface, the airbag (1) before inflation being surrounded by an evacuated sleeve (4) such that the planar spread-out state of the airbag (1) is dimensionally stable
**characterized in that**
in the evacuated state, the sleeve (4) together with the airbag (1) is configured to be mechanically deformable, a respective spatial shape produced by deformation of an airbag package comprising the sleeve (4) and the airbag (1) located therein being dimensionally stable.

2. The airbag module as claimed in claim 1, **characterized in that** the airbag (1) in its planar spread-out state is not folded or only slightly folded.

3. The airbag module as claimed in one of the preceding claims, **characterized in that** the airbag (1) before inflation is arranged in a planar spread-out state, in which it extends along a predefinable surface, so that at least over one part of the surface only two layers of the airbag are located on top of one another transversely to the surface.

4. The airbag module as claimed in one of the preceding claims, **characterized in that** the airbag (1) before inflation is arranged in a planar spread-out state, in which it extends along a predefinable surface, so that over a large part of the surface only two layers of the airbag (1) are located on top of one another transversely to the surface.

5. The airbag module as claimed in one of the preceding claims, **characterized in that** at no point of the surface are more than two layers of the airbag (1) located on top of one another transversely to the surface.

6. The airbag module as claimed in one of the preceding claims, **characterized in that** at no point of the surface are more than four layers of the airbag (1) located on top of one another transversely to the surface.

7. The airbag module as claimed in one of the preceding claims, **characterized in that** the airbag (1) in its planar spread-out state is folded back at least once onto itself, so that four layers of the airbag are located on top of one another transversely to the surface.

8. The airbag module as claimed in one of claims 3 to 7, **characterized in that** the layers of the airbag (1) bear closely against one another.

9. The airbag module as claimed in one of the preceding claims, **characterized in that** an airbag package comprising the evacuated sleeve (4) and the airbag (1) located therein is less than 1 cm thick transversely to the surface.

10. The airbag module as claimed in one of the preceding claims, **characterized in that** the airbag module is designed and provided for arranging on a region (8a) of a carrier (7) extending along the surface.

11. The airbag module as claimed in claim 10, **characterized in that** the region is a base (8a) of a depression (8) formed on the carrier (7).

12. The airbag module as claimed in one of the preceding claims, **characterized by** a cover (9) extending along the surface which covers the airbag (1) before inflation, the cover (9) being configured to open along at least one openable region when the airbag (1) during inflation presses against the cover (9).

13. The airbag module as claimed in one of the preceding claims, **characterized in that** the sleeve (4) has a first side (5) extending along the surface which - relative to an installed state of the airbag module - faces a person to be protected and has a second side (6) extending along the surface which extends substantially parallel to the first side (5).

14. The airbag module as claimed in one of the preceding claims, **characterized in that** the two sides (5, 6) are pressed against one another transversely to the surface by the vacuum prevailing in the sleeve (4) before inflation, so that the individual layers of the airbag (1) located on top of one another and extending along the surface are pressed against one another transversely to the surface and bear closely against one another.

15. The airbag module as claimed in claim 13 or 14, **characterized in that** the first side (5) has an outermost first edge region (5a) and **in that** the second side (6) has an outermost second edge region (6a), the two sides (5, 6) being connected to one another via the two edge regions (5a, 6a).

16. The airbag module as claimed in one of the preceding claims, **characterized in that** the sleeve (4) has a convex curvature in cross section.

17. The airbag module as claimed in one of the preceding claims, **characterized in that** the sleeve (4) has a step in cross section.

18. The airbag module as claimed in claim 10 or claim 11 to 17, where they refer back to claim 10, **characterized by** a flange (F) for fastening the airbag (1) to the carrier (7).

19. The airbag module as claimed in one of the preceding claims, **characterized in that** the airbag (1) has an inflow opening (O) through which gas may be introduced into the airbag (1) for inflating the airbag (1) in an inflow direction (E), the inflow opening (O) having a peripheral edge region.

20. The airbag module as claimed in claim 18 and 19, **characterized in that** the flange (F) is of annular configuration and has a peripheral edge region which is provided for bearing against the edge region of the inflow opening (O) such that the flange (F) is arranged in an interior (I) of the airbag (1) surrounded by the

21. The airbag module as claimed in claim 19 and 20, **characterized in that** the flange (F) is configured to press the edge region of the inflow opening (0) of the airbag (1) in the inflow direction (E) against the carrier (7), for securing the airbag (1) to a carrier (7).

22. The airbag module as claimed in one of the preceding claims, **characterized in that** the sleeve (4) is of flexible configuration.

23. The airbag module as claimed in one of the preceding claims, **characterized in that** the sleeve (4) is of film-like configuration, in particular made of a plastics material.

24. An airbag module arrangement comprising a carrier and an airbag module fastened thereto as claimed in one of the preceding claims, **characterized in that** the airbag (1) before inflation extends along the carrier (7) in its planar spread-out state.

25. The airbag module arrangement as claimed in claim 24, **characterized in that** the carrier (7) has a planar region (8a) along which the airbag (1) before inflation extends in its planar spread-out state.

26. The airbag module arrangement as claimed in claim 25, **characterized in that** the planar region is a base (8a) of a depression (8) configured on the carrier (7).

27. The airbag module arrangement as claimed in claim 26, **characterized by** a cover (9) which covers the depression (8) before inflation of the airbag (1), the cover (9) being configured to open along at least one openable region when the airbag (1) during inflation presses against the cover (9).

28. The airbag module arrangement as claimed in one of claims 24 to 27, **characterized in that** the carrier is configured as one of the following components:
- a motor vehicle part,
- a bodywork region, in particular a pillar of the motor vehicle bodywork,
- a motor vehicle cladding element,
- a vehicle roof,
- a roof frame,
- a vehicle door,
- a vehicle seat,
- a steering wheel rim,
- an instrument panel,
- a hood,
- a glove compartment cover,
- a sun visor
- a seatbelt
- clothing, in particular motorcycle clothing,
- a motorcycle fuel tank,
- a separate airbag pocket for retrofitting a motorcycle,
- a rucksack, or
- a motorcycle helmet.

29. The method for producing an airbag module as claimed in one of claims 1 to 23, comprising the following steps:
- providing a flexible airbag (1), able to be arranged in a multi-layered manner by folding, in a planar spread-out state, and
- enclosing the airbag (1) with a sleeve (4) which may be evacuated and evacuating the sleeve (4) such that the airbag (1) in its planar spread-out state extends in a dimensionally stable manner along a predefinable surface,
- the evacuated sleeve (4) together with the airbag (1) located therein, being mechanically deformed such that the airbag (1) after deformation in its planar spread-out state, extends in a dimensionally stable manner along a further predefinable surface.

## Revendications

1. Module d'airbag, en particulier pour un véhicule automobile, avec un airbag flexible pouvant être disposé en plusieurs couches par pliage, qui est gonflable avec du gaz pour la protection d'une personne, l'airbag étant disposé avant le gonflage dans un état déployé à plat, dans lequel il s'étend le long d'une surface prédéfinissable, l'airbag (1) étant entouré avant le gonflage par une enveloppe (4) évacuée de sorte que l'état déployé à plat de l'airbag (1) soit résistant à une déformation,
**caractérisé en ce que**
l'enveloppe (4) est réalisée de manière déformable mécaniquement avec l'airbag (1) à l'état évacué, une forme spatiale respective, générée par déformation, d'un paquet d'airbag comportant l'enveloppe (4) et l'airbag (1) se trouvant dedans, étant résistante à la déformation.

2. Module d'airbag selon la revendication 1, **caractérisé en ce que** l'airbag (1) n'est pas plié ou seulement légèrement dans son état déployé à plat.

3. Module d'airbag selon l'une quelconque des revendications précédentes, **caractérisé en ce que** l'airbag (1) est disposé avant le gonflage dans un état déployé à plat, dans lequel il s'étend le long d'une surface prédéfinissable de sorte que seules deux couches de l'airbag se superposent transversalement à la surface sur au moins une partie de la surface.

4. Module d'airbag selon l'une quelconque des revendications précédentes, **caractérisé en ce que** l'airbag (1) est disposé avant le gonflage dans un état déployé à plat, dans lequel il s'étend le long d'une surface prédéfinissable de sorte que seules deux couches de l'airbag (1) se superposent transversalement à la surface sur une grande partie de la surface.

5. Module d'airbag selon l'une quelconque des revendications précédentes, **caractérisé en ce qu'**à aucun endroit de la surface plus de deux couches de l'airbag (1) ne se superposent transversalement à la surface.

6. Module d'airbag selon l'une quelconque des revendications précédentes, **caractérisé en ce qu'**à aucun endroit de la surface plus de quatre couches de l'airbag (1) ne se superposent transversalement à la surface.

7. Module d'airbag selon l'une quelconque des revendications précédentes, **caractérisé en ce que** l'airbag (1) est plié sur lui-même au moins une fois dans son état déployé à plat de sorte que quatre couches de l'airbag se superposent transversalement à la surface.

8. Module d'airbag selon l'une quelconque des revendications 3 à 7, **caractérisé en ce que** les couches de l'airbag (1) reposent étroitement les unes sur les autres.

9. Module d'airbag selon l'une quelconque des revendications précédentes, **caractérisé en ce qu'**un paquet d'airbag comportant l'enveloppe (4) évacuée et l'airbag (1) se trouvant dedans présente une épaisseur inférieure à 1 cm transversalement à la surface.

10. Module d'airbag selon l'une quelconque des revendications précédentes, **caractérisé en ce que** le module d'airbag est installé et prévu pour la disposition sur une zone (8a) étendue le long de la surface d'un support (7).

11. Module d'airbag selon la revendication 10, **caractérisé en ce que** la zone est un fond (8a) d'une cuvette (8) réalisée sur le support (7).

12. Module d'airbag selon l'une quelconque des revendications précédentes, **caractérisé par** un recouvrement (9) étendu le long de la surface, qui recouvre l'airbag (1) avant le gonflage, le recouvrement (9) étant réalisé afin de s'ouvrir le long d'au moins une zone ouvrable, si l'airbag (1) presse lors du gonflage contre le recouvrement (9).

13. Module d'airbag selon l'une quelconque des revendications précédentes, **caractérisé en ce que** l'enveloppe (4) présente un premier côté (5) étendu le long de la surface, qui est tourné, par rapport à un état de montage du module d'airbag, vers une personne à protéger, et un deuxième côté (6) étendu le long de la surface, qui est étendu essentiellement parallèlement au premier côté (5).

14. Module d'airbag selon l'une quelconque des revendications précédentes, **caractérisé en ce que** les deux côtés (5, 6) sont pressés par la dépression régnant dans l'enveloppe (4) avant le gonflage transversalement à la surface l'un contre l'autre de sorte que les différentes couches de l'airbag (1) superposées et étendues le long de la surface soient pressées les unes contre les autres transversalement à la surface et reposent étroitement les unes sur les autres.

15. Module d'airbag selon la revendication 13 ou 14, **caractérisé en ce que** le premier côté (5) présente une première zone de bord (5a) extérieure, et **en ce que** le deuxième côté (6) présente une deuxième zone de bord (6a) extérieure, les deux côtés (5, 6) étant reliés entre eux par les deux zones de bord (5a, 6a).

16. Module d'airbag selon l'une quelconque des revendications précédentes, **caractérisé en ce que** l'enveloppe (4) présente en section une courbure convexe.

17. Module d'airbag selon l'une quelconque des revendications précédentes, **caractérisé en ce que** l'enveloppe (4) présente en section un étage.

18. Module d'airbag selon la revendication 10 ou l'une quelconque des revendications 11 à 17, lorsqu'elles dépendent de la revendication 10, **caractérisé par** une bride (F) pour la fixation de l'airbag (1) sur le support (7).

19. Module d'airbag selon l'une quelconque des revendications précédentes, **caractérisé en ce que** l'airbag (1) présente une ouverture d'admission (O) par laquelle du gaz peut être introduit dans l'airbag le long d'un sens d'admission (E) pour le gonflage de l'airbag (1), l'ouverture d'admission (O) présentant une zone de bord périphérique.

20. Module d'airbag selon la revendication 18 et 19, **caractérisé en ce que** la bride (F) est réalisée de manière annulaire et présente une zone de bord périphérique qui est prévue pour l'appui contre la zone de bord de l'ouverture d'admission (O) de telle sorte que la bride (F) soit disposée dans un espace intérieur (I) de l'airbag (1) entouré par l'airbag (1).

21. Module d'airbag selon la revendication 19 et 20, **caractérisé en ce que** la bride (F) est réalisée pour la fixation de l'airbag (1) sur un support (7) afin de presser la zone de bord de l'ouverture d'admission (O) de l'airbag (1) le long du sens d'admission (E) contre le support (7).

22. Module d'airbag selon l'une quelconque des revendications précédentes, **caractérisé en ce que** l'enveloppe (4) est réalisée flexible.

23. Module d'airbag selon l'une quelconque des revendications précédentes, **caractérisé en ce que** l'enveloppe (4) est réalisée comme une feuille, en particulier en une matière plastique.

24. Ensemble de module d'airbag avec un support et un module d'airbag selon l'une quelconque des revendications précédentes fixé dessus, **caractérisé en ce que** l'airbag (1) s'étend avant le gonflage dans son état déployé à plat le long du support (7).

25. Ensemble de module d'airbag selon la revendication 24, **caractérisé en ce que** le support (7) présente une zone (8a) plane, le long de laquelle l'airbag (1) s'étend avant le gonflage dans son état déployé à plat.

26. Ensemble de module d'airbag selon la revendication 25, **caractérisé en ce que** la zone plane est un fond (8a) d'une cuvette (8) réalisée sur le support (7).

27. Ensemble de module d'airbag selon la revendication 26, **caractérisé par** un recouvrement (9) qui recouvre avant le gonflage de l'airbag (1) la cuvette (8), le recouvrement (9) étant réalisé afin de s'ouvrir le long d'au moins une zone ouvrable, si l'airbag (1) presse lors du gonflage contre le recouvrement (9).

28. Ensemble de module d'airbag selon l'une quelconque des revendications 24 à 27, **caractérisé en ce que** le support est réalisé comme l'un des composants suivants :
- une partie de véhicule automobile,
- une zone de carrosserie, en particulier un montant d'une carrosserie de véhicule automobile,
- un habillage de véhicule automobile,
- un habillage de plafond de véhicule,
- un cadre de toit,
- une porte de véhicule,
- un siège de véhicule,
- une couronne de volant de direction,
- un tableau de bord,
- un capot moteur,
- un couvercle de boîte à gant,
- un pare-soleil,
- une ceinture,
- un revêtement, en particulier un revêtement de motocyclette,
- un réservoir de motocyclette,
- une poche d'airbag séparée pour l'équipement ultérieur d'une motocyclette,
- un sac à dos ou
- un casque de motocyclette.

29. Procédé de fabrication d'un module d'airbag selon l'une quelconque des revendications 1 à 23, comprenant les étapes suivantes :
- mise à disposition d'un airbag (1) flexible, pouvant être disposé en plusieurs couches par pliage dans un état déployé à plat, et
- enveloppement de l'airbag (1) avec une enveloppe (4) évacuable et évacuation de l'enveloppe (4) de sorte que l'airbag (1) s'étende dans son état déployé à plat de manière résistante à une déformation le long d'une surface prédéfinissable,
- l'enveloppe (4) évacuée étant déformée mécaniquement avec l'airbag (1) qui se trouve dedans de sorte que l'airbag (1) s'étende après déformation dans son état déployé à plat de manière résistante à une déformation le long d'une autre surface prédéfinissable.
